# EUROPÄISCHE PATENTANMELDUNG

(11) **EP 1 310 775 A1**
(43) Veröffentlichungstag der Anmeldung: **14.05.2003**
(21) Anmeldenummer: 01811083.3
(22) Anmeldetag: 09.11.2001
(51) Int. Cl.: G01F 1/698, G01F 1/684

(54) **Verfahren und Vorrichtung zur transient-thermischen Massenflussmessung**

(71) Anmelder: ABB RESEARCH LTD., 8050 Zürich (CH)
(72) Erfinder: Luchsinger, Rolf, 5416 Kirchdorf (CH); Matter, Daniel, 5200 Brugg (CH); Kramer, Beat, 5210 Windisch (CH)
(74) Vertreter: ABB Patent Attorneys

(57) **Zusammenfassung**

Die Erfindung betrifft ein Verfahren und eine Vorrichtung zum Messen eines Massenflusses eines Fluids (3). In herkömmlichen thermischen Sensoren (1) wird ein stationärer, quasistationärer oder extrapolierter stationärer Temperaturunterschied an den Temperatursensoren (5a, 5b) als Mass für die Strömungsgeschwindigkeit v oder den Massenfluss verwendet. Erfindungsgemäss wird eine Pulsdauer (t_{H}) der Heizleistung (P) für das Heizelement (6) so kurz gewählt, dass an den Temperatursensoren (5a, 5b) transiente Temperaturverläufe auftreten, aus denen charakteristische Temperaturen (T_{c1}, T_{c2}, Tₘ₁, Tₘ₂) und ein auf Massenfluss eichbares Messsignal bestimmt werden. Ausführungsbeispiele betreffen u. a.: eine Wahl der charakteristischen Temperaturen (T_{c1}, T_{c2}, Tₘ₁, Tₘ₂) in einem Maximumsbereich (8) der transienten Temperaturverläufe; eine Wahl maximaler Temperaturwerte (Tₘ₁, Tₘ₂) kleiner als ein stationärer Temperaturwert (T₁, T₂) des Temperatursensors (5a, 5b); eine Wahl einer Pulsdauer (t_{H}) der Heizleistung (P) kürzer als eine transiente Gesamt-Anstiegszeit (t_{A}); und/oder ein Peakwert-Detektor (7b) zur Signalerfassung. Vorteilhaft sind u. a. extrem kurze Messzeiten und gegebenenfalls hohe Messrepetitionsraten.

## Beschreibung

### TECHNISCHES GEBIET

Die vorliegende Erfindung bezieht sich auf das Gebiet der Messung von Gas- oder Flüssigkeitsströmungen mit thermischen Sensoren. Sie geht aus von einem Verfahren und einem Sensor zur Massenflussmessung gemäss Oberbegriff der unabhängigen Ansprüche.

### STAND DER TECHNIK

In der WO 00/37895 wird ein derartiges Verfahren und Gerät offenbart, bei dem ein Heizelement zwischen zwei Temperatursensoren angeordnet ist und der Massenfluss aus der Temperaturdifferenz der Temperatursensoren ermittelt wird. Zur Reduktion des Stromverbrauchs des Geräts wird ein pulsweiser Betrieb des Heizelements vorgeschlagen. Zusätzlich kann mit einer Überwachungsschaltung zwischen einem ungenauen Testmodus mit kurzen Heizpulsen und einem genauen Messmodus mit längeren Heizpulsen umgeschaltet werden. Dabei wird ein thermisches Gleichgewicht zumindest näherungsweise erreicht oder aber durch Extrapolation aus einem Anstiegsverhalten bestimmt. Nachteilig ist, dass die Messgenauigkeit mit abnehmender Dauer des Heizpulses markant schlechter wird. Insbesondere ist die Extrapolation eines stationären Gleichgewichtswerts aus dem transienten Temperatursignal für eine genaue Massenflussmessung ungeeignet. Auch kann durch Variation der Heizenergie nur die Amplitude des Temperatursignals, nicht jedoch die Anstiegszeit zur Erreichung oder Extrapolation des thermischen Gleichgewichts beeinflusst werden.

In der WO 01/18500 wird für einen verwandten Massenflusssensor vorgeschlagen, mit Hilfe einer gepulsten Heizleistung eine Wärmekapazität eines gestauten Fluids zu bestimmen.

### DARSTELLUNG DER ERFINDUNG

Aufgabe der vorliegenden Erfindung ist es, ein Verfahren und eine Vorrichtung zur gepulsten Massenflussmessung mit einer verbesserten Messgenauigkeit anzugeben. Diese Aufgabe wird erfindungsgemäss durch die Merkmale der unabhängigen Ansprüche gelöst.

In einem ersten Aspekt besteht die Erfindung in einem Verfahren zum Messen eines Massenflusses eines Fluids, bei welchem das Fluid über einen ersten Temperatursensor, ein Heizelement und einen zweiten Temperatursensor geführt wird, das Heizelement mit einer gepulsten Heizleistung betrieben wird und eine Pulsdauer der Heizleistung so gewählt wird, dass an deren Ende im Bereich der Temperatursensoren kein thermisches Gleichgewicht erreicht wird, wobei für jeden Temperatursensor ein charakteristischer Temperaturwert eines transienten Temperatursignals gemessen wird, aus den gemessenen charakteristischen Temperaturwerten beider Temperatursensoren ein Messsignal bestimmt wird und der Massenfluss durch Vergleich des Messsignals mit einem Eichwert ermittelt wird. Es wird also aus einem transienten Temperatursignal, d. h. in einem vom thermischen Gleichgewichtszustand weit entfernten Nichtgleichgewichtszustand, ein auf den Massenfluss geeichtes Temperatursignal gewonnen. Bei dem charakteristischen Temperaturwert handelt es sich um ein unmittelbares Messsignal des transienten Temperaturverlaufs und nicht um ein aus dem transienten Temperaturverlauf extrapoliertes Gleichgewichtssignal. Mit dem Verfahren kann die Messzeit verkürzt und bei Bedarf die Messrepetitionsrate erhöht werden, da kein stationäres Gleichgewicht abgewartet werden muss. Man kann also auch mit kurzen Heizpulsen eine hohe Messgenauigkeit erreichen.

In einem bevorzugten Ausführungsbeispiel wird der charakteristische Temperaturwert für jeden Temperatursensor im Bereich eines Maximums und insbesondere gleich einem maximalen Temperaturwert des transienten Temperatursignals gewählt. Dadurch wird ein besonders grosses und zuverlässig eichbares Messsignal gewonnen. Auch ist die Signalerfassung und Signalauswertung besonders einfach z. B. mit einem Peakwert-Detektor durchführbar.

Die Ausführungsbeispiele gemäss Anspruch 3 haben den Vorteil einer besonders einfachen Signalgewinnung und Signalauswertung, indem pro Temperatursensor genau ein charakteristischer Temperaturwert und/oder für alle Temperatursensoren gleichzeitige charakteristische Temperaturwerte gemessen werden und/oder das Messsignal aus einer Differenz der charakteristischen Temperaturwerte gebildet wird.

Das Ausführungsbeispiel gemäss Anspruch 4 hat den Vorteil, dass das charakteristische Temperatursignal hinreichend weit unterhalb der stationären Gleichgewichtstemperatur liegt, so dass eine Messzeit deutlich kürzer als eine Zeitdauer zum Erreichen eines stationären thermischen Gleichgewichts realisierbar ist.

Das Ausführungsbeispiel gemäss Anspruch 5 hat den Vorteil, dass eine Anstiegszeit und eine Abfallzeit des transienten Temperatursignals vergleichbare Grösse haben und ein transienter Temperaturverlauf mit einem deutlich ausgeprägten, gut erfassbaren charakteristischen Maximum vorhanden ist.

Das Ausführungsbeispiel gemäss Anspruch 6a hat den Vorteil, dass durch Variation der Pulsenergie die Auflösung des Messsignals angepasst und insbesondere das Signal-Rauschverhältnis erhöht werden kann.

Das Ausführungsbeispiel gemäss Anspruch 6b hat den Vorteil, dass durch Erhöhung der Heizpulsleistung die Messzeit weiter verkürzt werden kann. Dies ist besonders vorteilhaft, da bei einem herkömmlichen stationären, quasistationären oder extrapoliert stationären Betrieb die Zeit zum Erreichen des thermischen Gleichgewichts unabhängig von der verwendeten Heizleistung ist und nur durch die Geometrie und thermische Auslegung des Sensors vorgegeben ist.

In einem zweiten Aspekt besteht die Erfindung in einem Massenflusssensor zum Ermitteln eines Massenflusses eines Fluids, der insbesondere zur Ausführung des Verfahrens nach einem der vorangehenden Ansprüche geeignet ist. Der Massenflusssensor umfasst zwei in einer Flussrichtung nacheinander angeordnete Temperatursensoren, ein zwischen den Temperatursensoren angeordnetes Heizelement und Messmittel zum Ermitteln des Massenflusses aus Temperatursignalen der Temperatursensoren, wobei die Messmittel eine Pulssteuerung aufweisen, die dem Heizelement Energiepulse zur Erzeugung transienter Wärmepulse im Bereich der Temperatursensoren zuführt, wobei ferner die Messmittel Erfassungsmittel zum Messen eines charakteristischen Temperaturwerts eines transienten Temperatursignals jeden Temperatursensors umfassen und die Messmittel Auswertemittel zum Bestimmen eines Messsignals aus den gemessenen charakteristischen Temperaturwerten beider Temperatursensoren und zum Ermitteln des Massenflusses durch Vergleich des Messsignals mit einem Eichwert umfassen.

Die Ausführungsbeispiele gemäss Anspruch 8 und 9 haben den Vorteil einer besonders einfachen und genauen Messwerterfassung.

Weitere Ausführungen, Vorteile und Anwendungen der Erfindung ergeben sich aus abhängigen Ansprüchen sowie aus der nun folgenden Beschreibung und den Figuren.

### KURZE BESCHREIBUNG DER ZEICHNUNG

Es zeigen:
- Fig. 1: im Querschnitt ein durchströmtes Rohr oder einen Strömungskanal mit einem erfindungsgemässen Massenflusssensor mit transient-thermischer Signalerfassung;
- Fig. 2a, 2b: einen stationären Betrieb eines Massenflusssensors gemäss Stand der Technik;
- Fig. 2c, 2d: einen erfindungsgemässen transient-thermischen Betrieb eines Massenflusssensors;
- Fig. 3a: eine erfindungsgemässe Erfassung transienter Temperatursignale des Massenflusssensors; und
- Fig. 3b: eine erfindungsgemässe Eichkurve für Flussgeschwindigkeiten als Funktion transienter Temperatursignale.

In den Figuren sind gleiche Teile mit gleichen Bezugszeichen versehen.

### WEGE ZUR AUSFÜHRUNG DER ERFINDUNG

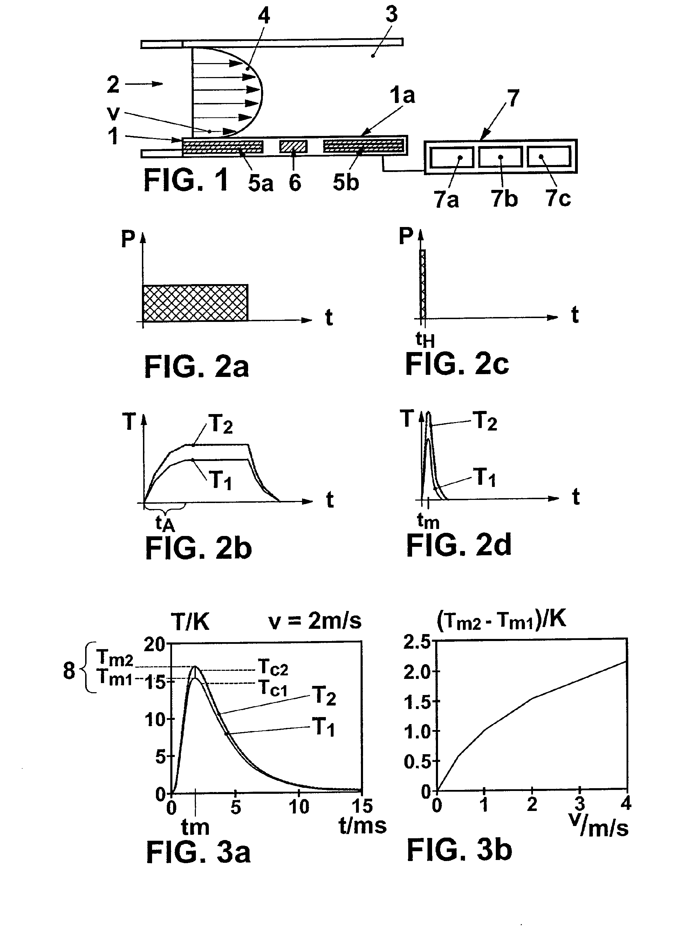

Fig. 1 zeigt einen an sich bekannten thermischen Massenflusssensor 1, der in einem Strömungskanal oder Rohr 2 angeordnet ist. Im Rohr 2 strömt ein Fluid 3, z. B. eine Flüssigkeit 3 oder ein Gas 3, mit einem Strömungs- oder Geschwindigkeitsprofil 4, wobei der Massenflusssensor 1 einer zu messenden Strömungsgeschwindigkeit v ausgesetzt ist. Der Massenflusssensor 1 umfasst ein Heizelement 6, stromaufwärts einen ersten Temperatursensor 5a und stromabwärts einen zweiten Temperatursensor 5b sowie Messmittel 7 zum Ermitteln des Massenflusses aus Temperatursignalen der Temperatursensoren 5a, 5b. Die prinzipielle Funktionsweise beruht darauf, dass eine vom Heizelement 6 erzeugte Temperaturverteilung durch die Strömung 4 asymmetrisch wird und ein Temperaturunterschied an den Temperatursensoren 5a, 5b als Mass für die Strömungsgeschwindigkeit v oder den Massenfluss verwendet wird. Im vorliegenden Fall umfassen die Messmittel 7 eine Pulssteuerung 7a, die dem Heizelement 6 Energiepulse zur Erzeugung transienter Wärmepulse im Bereich der Temperatursensoren 5a, 5b zuführt.

Erfindungsgemäss umfassen die Messmittel 7 zusätzlich Erfassungsmittel 7b zum Messen eines charakteristischen Temperaturwerts T_{c1}, T_{c2}, Tₘ₁, Tₘ₂ (Fig. 3a, 3b) eines transienten Temperatursignals jeden Temperatursensors 5a, 5b sowie Auswertemittel 7c zum Bestimmen eines Messsignals aus den gemessenen charakteristischen Temperaturwerten T_{c1}, T_{c2}, Tₘ₁, Tₘ₂ beider Temperatursensoren 5a, 5b und zum Ermitteln des Massenflusses durch Vergleich des Messsignals mit einem Eichwert.

Ausführungsbeispiele des Massenflusssensors 1 betreffen: Erfassungsmittel 7b, die einen Peakwert-Detektor 7b zum Messen eines maximalen Temperaturwerts Tₘ₁, Tₘ₂ des transienten Temperatursignals jeden Temperatursensors 5a, 5b umfassen; Auswertemittel 7c, die einen Differenzbildner 7c zum Bestimmen des Messsignals aus einer Differenz der gemessenen charakteristischen Temperaturwerte T_{c1}, T_{c2}, Tₘ₁, Tₘ₂ beider Temperatursensoren 5a, 5b umfassen; ferner Temperatursensoren 5a, 5b, die im wesentlichen symmetrisch um das Heizelement 6 angeordnet sind; Thermoelemente 5a, 5b als Temperatursensoren 5a, 5b; und/oder eine Anordnung, bei welcher die Temperatursensoren 5a, 5b und das Heizelement 6 zumindest teilweise auf einer dielektrischen Membran 1a angeordnet sind, die sich über eine Öffnung oder Vertiefung in einem Halbleiterbauelement, insbesondere einem CMOS-Halbleiterbauelement, erstreckt.

Mit Vorteil ist der Massenflusssensor 1 ein CMOS-Massenflusssensor 1, wie z. B. beschrieben in den Artikeln von F. Mayer et al., "Scaling of Thermal CMOS Gas Flow Microsensors: Experiment and Simulation", Proc. IEEE Micro Electro Mechanical Systems, S. 115ff (IEEE, 1996), oder in F. Mayer et al., "Single Chip CMOS Anemometer", Proc. IEEE International Electron Devices Meeting, S. 895ff (IEDM, 1997). Diese Artikel seien hiermit in ihrer Gesamtheit durch Bezugnahme in die Beschreibung mit aufgenommen.

Anhand der Fig. 2 - 3 wird das erfindungsgemässe Verfahren erläutert. Fig. 2a und 2b geben einen stationären oder quasistationären Betrieb gemäss Stand der Technik für den Massenflusssensor 1 an. Dem Heizelement 6 wird eine Heizleistung P solange zugeführt, dass beide Temperatursensoren 5a, 5b in ihr thermisches Gleichgewicht bei den stationären Temperaturen T₁, T₂ gelangt sind. Die Differenz der stationären Temperaturen T₂-T₁ ist bekanntermassen ein Mass für den Massenstrom entlang dem Sensor 1. Die Dauer der Heizleistung oder des Heizpulses P ist länger als eine Gesamt-Anstiegszeit t_{A} der Temperatursignale.

Fig. 2c, 2d zeigen den erfindungsgemässen transienten Betrieb. Eine Pulsdauer t_{H} der Heizleistung P wird so kurz gewählt, dass bei Pulsende im Bereich der Temperatursensoren 5a, 5b kein thermisches Gleichgewicht erreicht wird. Typischerweise tritt dann ein transienter Temperaturverlauf T₁, T₂ gemäss Fig. 2d auf, bei dem Temperaturmaxima deutlich unterhalb einer stationären Gleichgewichtstemperatur durchlaufen werden. Mit anderen Worten, die Pulsdauer t_{H} wird vorzugsweise so kurz gewählt, dass in dem transienten Temperatursignal jeden Temperatursensors 5a, 5b ein maximaler Temperaturwert Tₘ₁, Tₘ₂ kleiner als ein stationärer oder näherungsweise stationärer Temperaturwert T₁, T₂ des Temperatursensors 5a, 5b und insbesondere kleiner als ein halber stationärer Temperaturwert durchlaufen wird.

Fig. 3a zeigt im Detail die transienten Temperaturverläufe T₁ und T₂ mit einer transienten Anstiegszeit tₘ und einer vergleichbar kurzen Abfallzeit. Dabei wird für jeden Temperatursensor 5a, 5b ein charakteristischer Temperaturwert T_{c1}, T_{c2} vorzugsweise im Maximumsbereich 8 und insbesondere ein maximaler Temperaturwert Tₘ₁, Tₘ₂ der transienten Temperatursignale T₁, T₂ gemessen, aus den charakteristischen Werten T_{c1}, T_{c2} oder maximalen Werten Tₘ₁, Tₘ₂ ein Messsignal, beispielsweise durch Differenzbildung, bestimmt und der Massenfluss durch Vergleich des Messsignals mit einem Eichwert ermittelt.

Fig. 3b zeigt eine Eichkurve, bei der durch Modellrechnung der funktionelle Zusammenhang zwischen einer Differenz der maximalen Temperaturwerte Tₘ₂-Tₘ₁ und der Flussgeschwindigkeit v oder dem Massenfluss angegeben ist. Es zeigt sich, dass die Eichkurve eine vorteilhafte Charakteristik aufweist, die bei kleinen Strömungsgeschwindigkeiten eine grössere Steigung und damit Messempfindlichkeit oder Messauflösung und bei grösseren Strömungsgeschwindigkeiten eine kleinere Steigung und damit einen grösseren Messbereich aufweist.

Im Gegensatz zu herkömmlichen stationären, quasistationären oder extrapolierend stationären Messverfahren kann die transiente Anstiegszeit tₘ unabhängig von der Sensorgeometrie und thermischen Auslegung gewählt werden. Im Normalfall wird die Pulsdauer t_{H} oder transiente Anstiegszeit tₘ kürzer als die gesamte und insbesondere halbe Gesamt-Anstiegszeit t_{A} für den stationären Zustand gewählt.

Mit Vorteil wird eine Pulsenergie nach Massgabe einer gewünschten Auflösung des Messsignals gewählt. Bei höheren Pulsenergien werden höhere Temperaturen mit einer besseren Messauflösung erreicht. Es kann auch bei gegebener Pulsenergie zur Verkürzung einer Messzeit und/oder zur Erhöhung einer Repetitionsrate der Massenflussmessung eine Pulsdauer t_{H} verkürzt und eine Heizleistung P umgekehrt proportional erhöht werden. Die transient-thermische Messmethode ist daher besonders für schnell veränderliche Strömungsgeschwindigkeiten oder Massenflüsse von grossem Nutzen.

Insgesamt wird durch das erfindungsgemässe Messverfahren durch Ermitteln eines Messignals aus zwei charakteristischen transienten Temperaturwerten ein präzises, zuverlässig eichbares Signal für einen Massenfluss zur Verfügung gestellt.

### BEZUGSZEICHENLISTE

- 1: Massenflusssensor, CMOS-Sensor
- 1a: Membran
- 2: Strömungskanal, Rohr
- 3: Fluid; Flüssigkeit, Gas
- 4: Strömungsprofil
- 5a, 5b: erster, zweiter Temperatursensor, Thermoelemente
- 6: Heizelement, Heizdraht
- 7: Messmittel
- 7a: Pulssteuerung
- 7b: Erfassungsmittel, Peakwert-Detektor
- 7c: Auswertemittel, Differenzbildner
- 8: Bereich eines Temperaturmaximums
- P: Heizleistung
- T, T₁, T₂: Temperaturen
- T_{c1}, T_{c2}: charakteristische Temperaturen
- Tₘ₁, Tₘ₂: maximale Temperaturen
- t: Zeit
- t_{A}: Gesamt-Anstiegszeit des Temperatursignals bei stationärem Betrieb
- tₘ: verkürzte Anstiegszeit des Temperatursignals bei transientem Betrieb
- t_{H}: Pulsdauer der Heizleistung
- v: Flussgeschwindigkeit

## Patentansprüche

1. Verfahren zum Messen eines Massenflusses eines Fluids (3), bei welchem das Fluid (3) über einen ersten Temperatursensor (5a), ein Heizelement (6) und einen zweiten Temperatursensor (5b) geführt wird, das Heizelement (6) mit einer gepulsten Heizleistung (P) betrieben wird und eine Pulsdauer (t_{H}) der Heizleistung (P) so gewählt wird, dass an deren Ende im Bereich der Temperatursensoren (5a, 5b) kein thermisches Gleichgewicht erreicht wird, **dadurch gekennzeichnet, dass**
a) für jeden Temperatursensor (5a, 5b) ein charakteristischer Temperaturwert (T_{c1}, T_{c2}, Tₘ₁, Tₘ₂) eines transienten Temperatursignals gemessen wird,
b) aus den gemessenen charakteristischen Temperaturwerten (T_{c1}, T_{c2}, Tₘ₁, Tₘ₂) beider Temperatursensoren (5a, 5b) ein Messsignal bestimmt wird und
c) der Massenfluss durch Vergleich des Messsignals mit einem Eichwert ermittelt wird.

2. Das Verfahren nach Anspruch 1, **dadurch gekennzeichnet, dass**
a) der charakteristische Temperaturwert (T_{c1}, T_{c2}, Tₘ₁, Tₘ₂) für jeden Temperatursensor (5a, 5b) in einem Bereich (8) eines Maximums des transienten Temperatursignals gewählt wird und
b) insbesondere dass der charakteristische Temperaturwert (T_{c1}, T_{c2}, Tₘ₁, Tₘ₂) gleich einem maximalen Temperaturwert (Tₘ₁, Tₘ₂) des transienten Temperatursignals gewählt wird.

3. Das Verfahren nach einem der vorangehenden Ansprüche, **dadurch gekennzeichnet, dass**
a) für jeden Temperatursensor (5a, 5b) genau ein charakteristischer Temperaturwert (T_{c1}; T_{c2}; Tₘ₁; Tₘ₂) des transienten Temperatursignals gemessen wird und/oder
b) die charakteristischen Temperaturwerte (T_{c1}, T_{c2}, Tₘ₁, Tₘ₂) der Temperatursensoren gleichzeitig gemessen werden und/oder
c) das Messsignal aus einer Differenz der charakteristischen Temperaturwerte (T_{c1}, T_{c2}, Tₘ₁, Tₘ₂) gebildet wird.

4. Das Verfahren nach einem der vorangehenden Ansprüche, **dadurch gekennzeichnet, dass** eine Pulsdauer (t_{H}) der Heizleistung (P) so kurz gewählt wird, dass in dem transienten Temperatursignal jeden Temperatursensors (5a, 5b) ein maximaler Temperaturwert (Tₘ₁, Tₘ₂) kleiner als ein stationärer oder näherungsweise stationärer Temperaturwert (T₁, T₂) des Temperatursensors (5a, 5b) und insbesondere kleiner als ein halber stationärer Temperaturwert durchlaufen wird.

5. Das Verfahren nach einem der vorangehenden Ansprüche, **dadurch gekennzeichnet, dass** eine Pulsdauer (t_{H}) der Heizleistung (P) kürzer als eine Gesamt-Anstiegszeit (t_{A}) des transienten Temperatursignals und insbesondere kürzer als eine halbe Gesamt-Anstiegszeit (t_{A}) gewählt wird.

6. Das Verfahren nach einem der vorangehenden Ansprüche, **dadurch gekennzeichnet, dass**
a) eine Pulsenergie nach Massgabe einer gewünschten Auflösung des Messsignals gewählt wird und/oder
b) zur Verkürzung einer Messzeit und/oder zur Erhöhung einer Repetitionsrate der Massenflussmessung bei gegebener Pulsenergie eine Pulsdauer (t_{H}) verkürzt und eine Heizleistung (P) umgekehrt proportional erhöht wird.

7. Massenflusssensor (1) zum Ermitteln eines Massenflusses eines Fluids (3), insbesondere zur Ausführung des Verfahrens nach einem der vorangehenden Ansprüche, umfassend zwei in einer Flussrichtung nacheinander angeordnete Temperatursensoren (5a, 5b), ein zwischen den Temperatursensoren (5a, 5b) angeordnetes Heizelement (6) und Messmittel (7) zum Ermitteln des Massenflusses aus Temperatursignalen der Temperatursensoren (5a, 5b), wobei die Messmittel (7) eine Pulssteuerung (7a) aufweisen, die dem Heizelement (6) Energiepulse zur Erzeugung transienter Wärmepulse im Bereich der Temperatursensoren (5a, 5b) zuführt, **dadurch gekennzeichnet, dass**
a) die Messmittel (7) Erfassungsmittel (7b) zum Messen eines charakteristischen Temperaturwerts (T_{c1}, T_{c2}, Tₘ₁, Tₘ₂) eines transienten Temperatursignals jeden Temperatursensors (5a, 5b) umfassen und
b) die Messmittel (7) Auswertemittel (7c) zum Bestimmen eines Messsignals aus den gemessenen charakteristischen Temperaturwerten (T_{c1}, T_{c2}, Tₘ₁, Tₘ₂) beider Temperatursensoren (5a, 5b) und zum Ermitteln des Massenflusses durch Vergleich des Messsignals mit einem Eichwert umfassen.

8. Massenflusssensor (1) nach Anspruch 7, **dadurch gekennzeichnet, dass** die Erfassungsmittel (7b) einen Peakwert-Detektor (7b) zum Messen eines maximalen Temperaturwerts (Tₘ₁, Tₘ₂) des transienten Temperatursignals jeden Temperatursensors (5a, 5b) umfassen.

9. Massenflusssensor (1) nach einem der Ansprüche 7-8, **dadurch gekennzeichnet, dass** die Auswertemittel (7c) einen Differenzbildner (7c) zum Bestimmen des Messsignals aus einer Differenz der gemessenen charakteristischen Temperaturwerte (T_{c1}, T_{c2}, Tₘ₁, Tₘ₂) beider Temperatursensoren (5a, 5b) umfassen.

10. Massenflusssensor (1) nach einem der Ansprüche 7-9, **dadurch gekennzeichnet, dass**
a) die Temperatursensoren (5a, 5b) im wesentlichen symmetrisch um das Heizelement (6) angeordnet sind und/oder
b) die Temperatursensoren (5a, 5b) Thermoelemente (5a, 5b) sind und/oder
c) die Temperatursensoren (5a, 5b) und das Heizelement (6) zumindest teilweise auf einer dielektrischen Membran (1a) angeordnet sind, die sich über eine Öffnung oder Vertiefung in einem Halbleiterbauelement, insbesondere einem CMOS-Halbleiterbauelement, erstreckt.
